# EUROPÄISCHE PATENTSCHRIFT

(11) **EP 3 027 490 B1**
(45) Veröffentlichungstag und Bekanntmachung des Hinweises auf die Patenterteilung: **23.05.2018**
(21) Anmeldenummer: 14739809.3
(22) Anmeldetag: 15.07.2014
(51) Int. Cl.: B62D 25/02, B62D 25/04, B62D 27/06, B62D 29/04

(54) **FAHRZEUGKAROSSERIE MIT ZWEI VERKLEBTEN KAROSSERIEBAUTEILEN**
VEHICLE BODY HAVING TWO ADHESIVELY BONDED BODY COMPONENTS
CARROSSERIE DE VÉHICULE COMPRENANT DEUX ÉLÉMENTS DE CARROSSERIE COLLÉS

(30) Priorität: 29.07.2013 DE 102013214782
(43) Veröffentlichungstag der Anmeldung: 08.06.2016
(73) Patentinhaber: Bayerische Motoren Werke Aktiengesellschaft, 80809 München (DE)
(72) Erfinder: BEIL, Andreas, 80935 München (DE); LENZ, Juergen, 85716 Unterschliessheim (DE); SCHMID, Lorenz, 82234 Wessling (DE); SCHNAUFER, Thomas, 82386 Oberhausen (DE); EIS, Martin, 85757 Karlsfeld (DE); FLEISCHER, Torsten, 80634 München (DE)
(86) Internationale Anmeldenummer: PCT/EP2014/065083
(87) Internationale Veröffentlichungsnummer: WO 2015/014598

(56) Entgegenhaltungen:
- EP-A1- 2 457 808
- EP-A1- 2 535 242
- EP-A2- 1 557 342
- JP-A- 2011 195 107
- US-A1- 2011 057 476

## Beschreibung

Die Erfindung betrifft eine Fahrzeugkarosserie mit einem ersten Karosseriebauteil aus faserverstärktem Kunststoff und einem zweiten Karosseriebauteil aus faserverstärktem Kunststoff, die mittels einer Klebeschicht miteinander verklebt und in einer Hauptbelastungsebene auf Schub und/oder Zug belastet sind.

Bei Fahrzeugkarosserien moderner Fahrzeuge sind deren Karosseriebauteile aus faserverstärktem Kunststoff gestaltet. Solche Karosseriebauteile sind vergleichsweise dünnwandig und weisen entsprechend eine geringe Steifigkeit und Stabilität auf. Entsprechend ist es problematisch solche Karosseriebauteile zu einer einerseits zu einer stabilen bzw. steifen, andererseits aber auch gezielt nachgiebigen Fahrzeugkarosserie zu verbinden. Dabei ist es grundsätzlich bekannt, die Karosseriebauteile miteinander an Klebeflächen mittels Klebeschichten zu verkleben.

Aus EP 1 557 342 A2 ist eine Baugruppe einer Fahrzeugkarosserie in Blechschalenbauweise bekannt, die eine aus Blech gestaltete Außenschale und eine aus Blech gestaltete Innenschale umfasst. Ferner ist die Baugruppe mit zumindest einem aus faserverstärktem Kunststoff bestehenden Verstärkungsteil verstärkt, das flächig mit einer der Blechschalen verklebt ist. Beide Blechschalen sind mittels eines seitlichen und eines oberen Verbindungsflansches miteinander verbunden.

Aus EP 2 457 808 A1 ist eine Seitenwand einer Fahrzeugkarosserie bekannt, die zwei faserverstärkten Kunststoffschalen und eine dazwischen liegende, verstärkende Metallstruktur umfasst. Dabei ist die Metallstruktur zwischen die beiden Kunststoffschalen eingeklebt.

Erfindungsgemäß ist eine Fahrzeugkarosserie mit einem ersten Karosseriebauteil aus faserverstärktem Kunststoff und einem zweiten Karosseriebauteil aus faserverstärktem Kunststoff geschaffen, die mittels einer Klebeschicht miteinander verklebt und in einer Hauptbelastungsebene auf Schub und/oder Zug belastet sind, wobei die Klebeschicht mittels eines Klebeflansches gestaltet ist, an dem die Klebeschicht schräg zur Hauptbelastungsebene in einem Winkel zwischen 30° und 60° ausgerichtet ist. Besonders bevorzugt ist die erfindungsgemäße Klebeschicht schräg zur Hauptbelastungsebene in einem Winkel zwischen 40° und 50° ausgerichtet, insbesondere in einem Winkel von 45° ausgerichtet.

Mit der erfindungsgemäß gestalteten Klebeschicht, die an einem zugehörigen Klebeflansch gezielt schräg zur Hauptbelastungsebene gestellt ist, ist ein scherendes Fügen an der Verbindungsstelle der beiden miteinander verbundenen Karosseriebauteile vermieden. Zugleich sind auch Kopfzuglasten vermieden und stattdessen ist eine reine Lasteinleitung auf die Kleberschicht durch Schub gewährleistet. Die damit geschaffene Klebung weist eine hohe Lebensdauer und auch hohe Festigkeit auf. Mit ihr kann auch eine Dichtfunktion übernommen werden. Dazu ist es insbesondere vorteilhaft, die erfindungsgemäße Klebung als Strukturklebung, d.h. als Klebung mit besonderer struktureller Gestaltung der Klebeflächen, mit Dichtfunktion zu gestalten. Erfindungsgemäß ist entsprechend keine zweite Verbindungstechnik, wie etwa Schrauben oder Nieten, und auch kein zusätzlicher Abdichtprozess erforderlich.

Die erfindungsgemäßen Karosseriebauteile sind vorzugsweise mit Kunststoff als Matrix gestaltet, wozu sowohl duroplastische als auch thermoplastische Polymere eingesetzt werden können. Als duroplastische Matrixsysteme werden die relativ preisgünstigen Polyesterharze, Vinylesterharze und Epoxidharze verwendet. Es können auch thermoplastische Faserverbundwerkstoffe hergestellt werden. Als Matrixsysteme kommen dann vorwiegend Polyamide, Polypropylene und Polyethylene zum Einsatz. In dem derartigen Kunststoff sind Verstärkungsstoffe bzw. Verstärkungsfasern eingebettet. Als Verstärkungsmaterial kommen erfindungsgemäß vorwiegend synthetische Fasern aus Glas, Kohlenstoff und Aramid zum Einsatz, die als Rovings, Gelege, Gewebe oder Vliese verwendet werden. Damit können die Eigenschaften der insbesondere schalenförmigen Karosseriebauteile sowohl absolut als auch in ihrem Verhältnis zwischen dessen Längs- und Querrichtung in einem weiten Bereich variiert werden.

Als Klebeverfahren wird erfindungsgemäß bevorzugt auf die Karosseriebauteile vor einem Zusammenfügen ein Aktivator aufgebracht, der die chemische Reaktion des zugehörigen Klebstoffs an den Grenzflächen zu den Karosseriebauteilen stark beschleunigt. Ferner wird nur auf ein Karosseriebauteil Kleber aufgetragen, wohingegen das andere Karosseriebauteil stark aufgeheizt wird. Beim nachfolgenden Zusammenfügen der Karosseriebauteile stellt sich eine Übergangstemperatur von deutlich über Raumtemperatur ein. Diese Temperatur in Verbindung mit dem Aktivator führt zu einer sehr schnellen Reaktion des Klebstoffs an den Grenzflächen, so dass nach wenigen Sekunden Beharrung bei dieser Übergangstemperatur der Klebstoff an den Grenzflächen soviel Festigkeit aufbaut, dass bei einer anschließenden Temperaturerhöhung zur Durchhärtung des Klebstoffs keine Luft in den Klebstoff eindringen kann.

Mit dem derartigen erfindungsgemäßen ersten und zweiten Karosseriebauteil ist vorzugsweise eine A-Säule einer Fahrgastzelle gestaltet. Eine solche A-Säule ist im Hinblick auf ihre Hauptbelastungsebene bei normalem Betrieb des Fahrzeugs in vertikaler Richtung belastet und bei einem Seitenaufprall in horizontaler Richtung. Sie weist also zwei Hauptbelastungsebenen, eine vertikale Belastungsebene und eine horizontale Belastungsebene, auf.

Ferner ist an der erfindungsgemäßen Fahrzeugkarosserie vorteilhaft mit dem ersten Karosseriebauteil ein Seitenrahmen einer Fahrgastzelle und mit dem zweiten Karosseriebauteil ein Ringträgerunterteil der Fahrgastzelle gestaltet. Bei diesen beiden Karosseriebauteilen ergeben sich wiederum als Hauptbelastungsebenen eine vertikale Belastungsebene für die gewöhnliche Stützbelastung und eine horizontale Belastungsebene für einen Seitenaufprall.

An der Fahrzeugkarosserie gemäß der Erfindung ist ferner vorzugsweise ein drittes Karosseriebauteil vorgesehen, dessen Klebeschicht zum ersten oder zweiten Karosseriebauteil die Klebeschicht zwischen dem ersten und dem zweiten Karosseriebauteil überdeckt. Mit dieser Kleberschichtanordnung befinden sich also zwei Kleberschichten überdeckend übereinander, wobei sich zwischen den Kleberschichten ein Karosseriebauteil befindet. Die weiteren beiden Karosseriebauteile liegen an den beiden Außenseiten dieser Kleberschichten. Die Karosseriebauteile können dabei wie Dachschindeln einander nur teilweise überdecken. Dennoch ist ein "zentraler" Kleberbereich geschaffen, der als Verbindungsknoten für die Karosseriebauteile wirkt. An diesem Verbindungsknoten ist mit den erfindungsgemäß gestalteten Kleberschichten eine hohe Steifigkeit erreichbar und zugleich ein besonders vorteilhafter Spannungsausgleich bei Temperaturdehnung der beteiligten Karosseriebauteile möglich.

Mit dem ersten und zweiten Karosseriebauteil ist erfindungsgemäß bevorzugt ein Seitenrahmen einer Fahrgastzelle und mit dem dritten Karosseriebauteil eine Spritzwand bzw. vordere Stirnwand der Fahrgastzelle gestaltet. An diesem Verbindungsknoten sind also vorteilhaft Seitenrahmen und Spritzwand gekoppelt.

Die Erfindung ist ferner auf eine Fahrzeugkarosserie, insbesondere der oben genannten Art, gerichtet, mit einem ersten Karosseriebauteil aus faserverstärktem Kunststoff und einem zweiten Karosseriebauteil aus faserverstärktem Kunststoff, die mittels einer Klebeschicht miteinander verklebt und in einer Hauptbelastungsebene auf Schub und/oder Zug belastet sind, wobei die Klebeschicht mittels eines gekrümmten Klebeflansches gestaltet ist. Die derartige Klebeschicht ist gezielt gewölbt bzw. in eine Wölbung der beteiligten Karosseriebauteile hinein ausgebildet. Auch mit der derartigen Gestaltung können scherendes Fügen und Kopfzuglasten vermieden sowie eine Lasteinleitung auf Schub erreicht werden. Ferner ist eine solche Klebung vorteilhaft in Bezug auf eine angestrebte Dichtfunktion.

Mit der derartigen Klebeflanschkonstruktion ist vorteilhaft eine Anbindung eines Schwellers einer Fahrgastzelle an einen Seitenrahmen ausgestaltet, wobei mit dem ersten Karosseriebauteil eine Schwellerverstärkung einer Fahrgastzelle und mit dem zweiten Karosseriebauteil ein Seitenrahmen der Fahrgastzelle gestaltet ist.

Schließlich ist die Erfindung auch auf eine Fahrzeugkarosserie, insbesondere der oben genannten Art, gerichtet, mit einem ersten Karosseriebauteil aus faserverstärktem Kunststoff und einem zweiten Karosseriebauteil aus faserverstärktem Kunststoff, die mittels einer Klebeschicht miteinander verklebt sind, wobei ganz gezielt die Klebeschicht mit einer Dicke von 1,4 mm bis 1,6 mm gestaltet ist. Mit einer derartigen Klebeschicht ist, insbesondere in Kombination mit dem oben erläuterten Klebeverfahren, ein besonders vorteilhafter Toleranzausgleich der beteiligten Karosseriebauteile innerhalb der Klebeschicht möglich. Es ist dann ferner keine zweite Verbindungstechnik, wie etwa Schrauben oder Nieten, und kein zusätzlicher Abdichtprozess erforderlich.

Nachfolgend werden Ausführungsbeispiele der erfindungsgemäßen Lösung anhand der beigefügten schematischen Zeichnungen näher erläutert. Es zeigt:

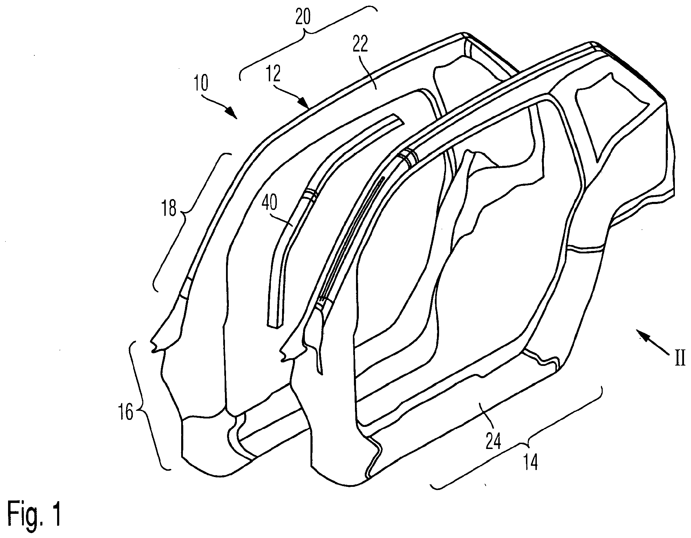

- Fig. 1: eine perspektivische Explosionsdarstellung eines Teils einer erfindungsgemäßen Fahrzeugkarosserie,

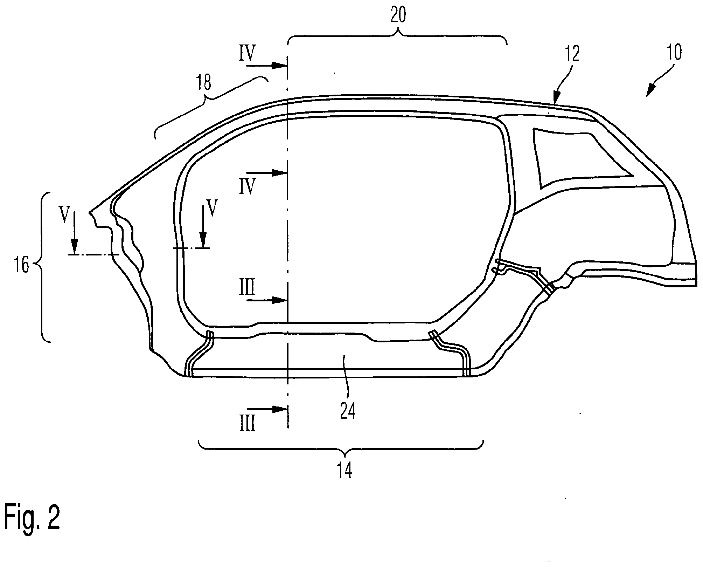

- Fig. 2: die Ansicht II gemäß Fig. 1,
- Fig. 3: den Schnitt III - III in Fig. 2,
- Fig. 4: den Schnitt IV - IV in Fig. 2 und
- Fig. 5: den Schnitt V - V in Fig. 2.

Eine Fahrzeugkarosserie 10 eines Personenkraftwagens weist als einen wesentlichen Teil ihrer Fahrgastzelle eine Seitenwand bzw. einen Seitenrahmen 12 auf. Der Seitenrahmen 12 bildet seitlich an der Fahrzeugkarosserie 10 eine Ringform, mit der Fahrzeuginsassen im Inneren der Fahrgastzelle sowohl bei einem Frontalaufprall als auch bei einem Seitenaufprall auf die Fahrzeugkarosserie 10 besonders geschützt sind. Der Seitenrahmen 12 beinhaltet bezogen auf das zugehörige Fahrzeug als Karosseriebauteile einen unteren Schweller bzw. einen Schweller-Bereich 14, eine vordere Spritzwand bzw. einen Spritzwand-Bereich 16, eine vordere A-Säule bzw. einen A-Säulen-Bereich 18 und einen oberen Dachholm bzw. einen Dachholm-Bereich 20.

Gebildet ist der Seitenrahmen 12 aus einer inneren Seitenrahmen-Schale 22 und einer äußeren Seitenrahmen-Schale 24, die jeweils als dünnwandige Karosseriebauteile in strukturierter Schalenform aus faserverstärktem Kunststoff hergestellt sind.

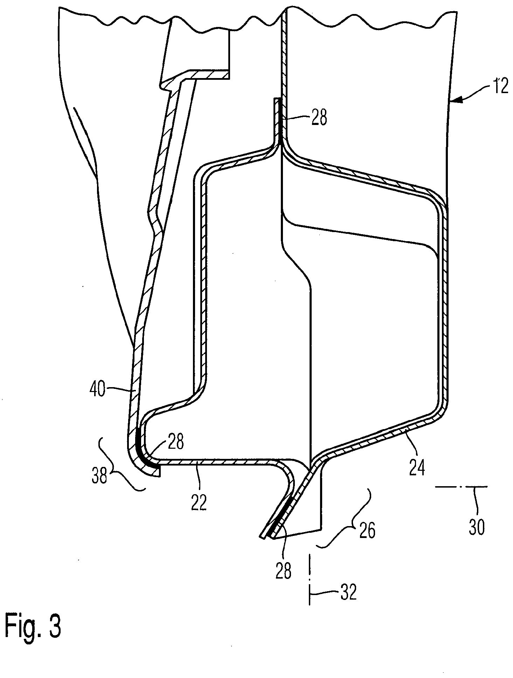

Die beiden Seitenrahmen-Schalen 22 und 24 sind an streifenförmigen, insbesondere entlang von Rändern der Seitenrahmen-Schalen 22 und 24 verlaufenden, ebenfalls dünnwandigen Klebeflanschen 26 miteinander verklebt. In den Fig. 3, 4 und 5 ist veranschaulicht, dass diese Klebeflansche 26 jeweils eine Klebeschicht 28 mit einer Dicke von 1,5 mm mit einer Dickentoleranz von +/- 0,1 mm zwischen den beiden dort verklebten Karosseriebauteilen aufweisen.

Ferner sind diese Klebeflansche 26 in Bezug sowohl auf eine horizontale Hauptbelastungsebene 30 als auch auf eine vertikale Hauptbelastungsebe ne 32 der jeweiligen Klebestelle in einem Winkel 34 von ca. 45° schräg gestellt sind.

In Fig. 3 ist ferner veranschaulicht, dass an der Innenseite der inneren Seitenrahmen-Schale 22 an deren unterem Schweller-Bereich 14 ferner eine ebenfalls schalenförmige Schwellerverstärkung 36 aus faserverstärktem Kunststoff vorgesehen ist, die mittels eines gekrümmten Klebeflansches 38 und einer dort in dessen Krümmung angeordneter Klebeschicht 28 mit ebenfalls einer Dicke von 1,5 +/- 0,1 mm verklebt ist.

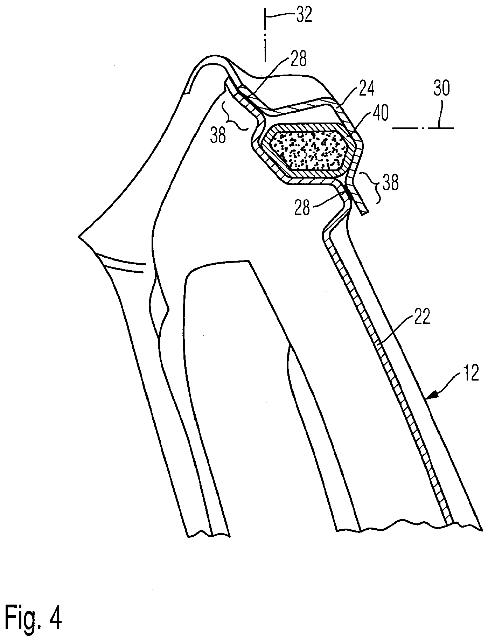

Mit der Fig. 4 ist ferner veranschaulicht, wie im A-Säulen-Bereich 18 zwischen den zu den Hauptbelastungsebenen 30 und 32 schräg gestellten Klebeflanschen 26 im Inneren der beiden Seitenrahmen-Schalen 22 und 24 eine stabförmige, ebenfalls aus faserverstärktem Kunststoff hergestellte A-Säulen-Verstärkung 40 gehalten ist.

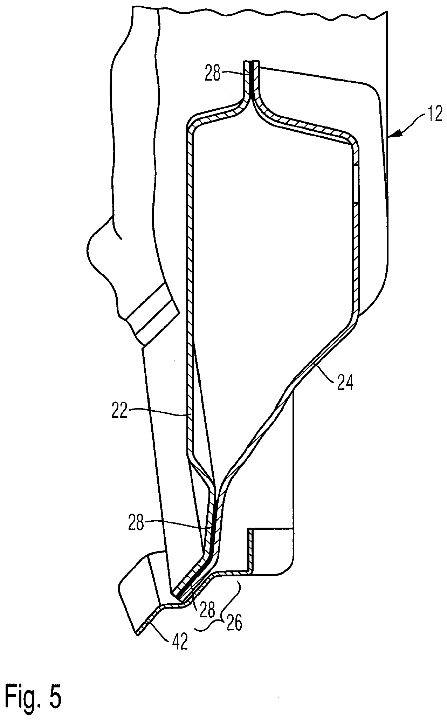

An der Fig. 5 ist schließlich in deren linkem Bereich zu erkennen, wie eine Spritzwand-Schale 42, die sich im zugehörigen Fahrzeug im Wesentlichen in dessen Querrichtung als untere, vordere Spritzwand bzw. Stirnwand der Fahrgastzelle erstreckt, an ihrem seitlichen Randbereich mittels einer ebenfalls schräg gestellten Klebeschicht 28 an den aus der inneren Seitenrahmen-Schale 22 und der äußeren Seitenrahmen-Schale 24 gebildeten Seitenrahmen 12 geklebt ist. Die Klebeschicht 28 für die Spritzwand-Schale 42 überdeckt sich dabei mit der Klebeschicht 28 zumindest teilweise, so wie es auch bei Dachschindeln der Fall ist. Auf diese Weise ist ein aus übereinander geschichteten Kleberschichten 28 aufgebauter Verbindungsknoten der zugehörigen Spritzwand zu dem Seitenrahmen 12 geschaffen.

### Bezugszeichenliste

- 10: Fahrzeug karosserie
- 12: Seitenrahmen
- 14: Schweller-Bereich
- 16: Spritzwand-Bereich
- 18: A-Säulen-Bereich
- 20: Dachholm-Bereich
- 22: innere Seitenrahmen-Schale
- 24: äußere Seitenrahmen-Schale
- 26: schräg ausgerichteter Klebeflansch
- 28: Klebeschicht
- 30: horizontale Haupt belastungsebene
- 32: vertikale Hauptbelastungsebene
- 34: Winkel
- 36: Schwellerverstärkung
- 38: gekrümmter Klebeflansch
- 40: A-Säulen-Verstärkung
- 42: Spritzwand-Schale

## Patentansprüche

1. Fahrzeugkarosserie (10) mit einem ersten Karosseriebauteil (22, 24, 36, 42) und einem zweiten Karosseriebauteil (22, 24, 36, 42), die miteinander verbunden sind,
**dadurch gekennzeichnet, dass** das erste Karosseriebauteil (22, 24, 36, 42) aus faserverstärktem Kunststoff und das zweite Karosseriebauteil (22, 24, 36, 42) aus faserverstärktem Kunststoff gestaltet und mittels einer Klebeschicht (28) miteinander verklebt und in einer Hauptbelastungsebene auf Schub und/oder Zug belastet sind, wobei die Klebeschicht (28) mittels eines Klebeflansches gestaltet ist, an dem die Klebeschicht (28) gezielt schräg zur Hauptbelastungsebene (30, 32) in einem Winkel (34) zwischen 30° und 60° ausgerichtet ist.

2. Fahrzeugkarosserie nach Anspruch 1,
wobei die Klebeschicht (28) gezielt schräg zur Hauptbelastungsebene (30, 32) in einem Winkel (34) zwischen 40° und 50° ausgerichtet ist.

3. Fahrzeugkarosserie nach Anspruch 1,
wobei die Klebeschicht (28) gezielt schräg zur Hauptbelastungsebene (30, 32) in einem Winkel (34) von 45° ausgerichtet ist.

4. Fahrzeugkarosserie nach einem der Ansprüche 1 bis 3,
wobei mit dem ersten Karosseriebauteil (22, 24) und dem zweiten Karosseriebauteil (22, 24) eine A-Säule einer Fahrgastzelle gestaltet ist.

5. Fahrzeugkarosserie nach einem der Ansprüche 1 bis 3,
wobei mit dem ersten Karosseriebauteil (22, 24, 36) ein Seitenrahmen (12) einer Fahrgastzelle und mit dem zweiten Karosseriebauteil ein Ringträgerunterteil der Fahrgastzelle gestaltet ist.

6. Fahrzeugkarosserie nach einem der Ansprüche 1 bis 5,
wobei ein drittes Karosseriebauteil (22, 24, 36, 42) vorgesehen ist, dessen Klebeschicht (28) zum ersten oder zweiten Karosseriebauteil (22, 24, 36, 42) die Klebeschicht (28) zwischen dem ersten und dem zweiten Karosseriebauteil (22, 24, 36, 42) überdeckend gestaltet ist.

7. Fahrzeugkarosserie nach Anspruch 6,
wobei mit dem ersten und zweiten Karosseriebauteil (22, 24) ein Seitenrahmen (12) einer Fahrgastzelle und mit dem dritten Karosseriebauteil (42) eine Spritzwand der Fahrgastzelle gestaltet ist.

8. Fahrzeugkarosserie, nach einem der Ansprüche 1 bis 7, mit einem ersten Karosseriebauteil (22, 24, 36, 42) aus faserverstärktem Kunststoff und einem zweiten Karosseriebauteil (22, 24, 36, 42) aus faserverstärktem Kunststoff, die mittels einer Klebeschicht (28) miteinander verklebt und in einer Hauptbelastungsebene (30, 32) auf Schub und/oder Zug belastet sind,
wobei die Klebeschicht (28) mittels eines gekrümmten Klebeflansches (38) gestaltet ist.

9. Fahrzeugkarosserie nach Anspruch 8,
wobei mit dem ersten Karosseriebauteil eine Schwellerverstärkung (36) einer Fahrgastzelle und mit dem zweiten Karosseriebauteil (22, 24) ein Seitenrahmen (12) der Fahrgastzelle gestaltet ist.

10. Fahrzeugkarosserie, nach einem der Ansprüche 1 bis 9, mit einem ersten Karosseriebauteil (22, 24, 36, 42) aus faserverstärktem Kunststoff und einem zweiten Karosseriebauteil (22, 24, 36, 42) aus faserverstärktem Kunststoff, die mittels einer Klebeschicht (28) miteinander verklebt sind,
wobei die Klebeschicht (28) mit einer Dicke von 1,4 mm bis 1,6 mm gestaltet ist.

## Claims

1. A vehicle body (10) with a first body component (22, 24, 36, 42) and a second body component (22, 24, 36, 42) which are connected together, **characterised in that** the first body component (22, 24, 36, 42) is made from fibre-reinforced plastics material and the second body component (22, 24, 36, 42) is made from fibre-reinforced plastics material and are glued together by means of an adhesive layer (28) and are subjected to shearing and/or tensile load in a main loading plane,
wherein the adhesive layer (28) is formed by means of an adhesive flange on which the adhesive layer (28) is deliberately oriented obliquely to the main loading plane (30, 32) at an angle (34) of between 30° and 60°.

2. A vehicle body according to Claim 1,
wherein the adhesive layer (28) is deliberately oriented obliquely to the main loading plane (30, 32) at an angle (34) of between 40° and 50°.

3. A vehicle body according to Claim 1,
wherein the adhesive layer (28) is deliberately oriented obliquely to the main loading plane (30, 32) at an angle (34) of 45°.

4. A vehicle body according to one of Claims 1 to 3,
wherein an A-pillar of a passenger cell is formed with the first body component (22, 24) and the second body component (22, 24).

5. A vehicle body according to one of Claims 1 to 3,
wherein a side frame (12) of a passenger cell is formed with the first body component (22, 24, 36) and an annular support lower part of the passenger cell is formed with the second body component.

6. A vehicle body according to one of Claims 1 to 5,
wherein a third body component (22, 24, 36, 42) is provided, the adhesive layer (28) of which relative to the first or second body component (22, 24, 36, 42) is formed covering the adhesive layer (28) between the first and the second body component (22, 24, 36, 42).

7. A vehicle body according to Claim 6,
wherein a side frame (12) of a passenger cell is formed with the first and second body component (22, 24) and a front bulkhead of the passenger cell is formed with the third body component (42).

8. A vehicle body according to one of Claims 1 to 7, with a first body component (22, 24, 36, 42) made from fibre-reinforced plastics material and a second body component (22, 24, 36, 42) made from fibre-reinforced plastics material, which are glued together by means of an adhesive layer (28) and are subjected to shearing and/or tensile load in a main loading plane (30, 32),
wherein the adhesive layer (28) is formed by means of a curved adhesive flange (38).

9. A vehicle body according to Claim 8,
wherein a sill reinforcement (36) of a passenger cell is formed with the first body component and a side frame (12) of the passenger cell is formed with the second body component (22, 24).

10. A vehicle body according to one of Claims 1 to 9, having a first body component (22, 24, 36, 42) made from fibre-reinforced plastics material and a second body component (22, 24, 36, 42) made from fibre-reinforced plastics material, which are glued together by means of an adhesive layer (28),
wherein the adhesive layer (28) is formed with a thickness of 1.4 mm to 1.6 mm.

## Revendications

1. Carrosserie de véhicule (10) comprenant un premier composant de carrosserie (22, 24, 36, 42) et un second composant de carrosserie (22, 24, 36, 42) qui sont liés l'un à l'autre,
**caractérisée en ce que**
le premier composant de carrosserie (22, 24, 36, 42) est réalisé en un matériau synthétique renforcé par des fibres et le second composant de carrosserie (22, 24, 36, 42) est réalisé en un matériau synthétique renforcé par des fibres et ces composants de carrosserie sont collés l'un à l'autre au moyen d'une couche de colle (28), et sont chargés en poussée et/ou en traction dans un plan de charge principal, la couche de colle (28) étant réalisée au moyen d'un flan de colle sur lequel la couche de colle (28) est orientée obliquement par rapport au plan de charge principal (30, 32) selon un angle (34) compris entre 30° et 60°.

2. Carrosserie de véhicule conforme à la revendication 1,
dans laquelle la couche de colle (28) est orientée obliquement par rapport au plan de charge principal du véhicule (30, 32) selon un angle (34) compris entre 40° et 50°.

3. Carrosserie de véhicule conforme à la revendication 1,
dans laquelle la couche de colle (28) est orientée obliquement par rapport au plan de charge principal (30, 32) selon un angle (34) de 45°.

4. Carrosserie de véhicule conforme à l'une des revendications 1 à 3,
dans laquelle la colonne A d'un habitacle de véhicule est réalisée avec le premier composant de carrosserie (22, 24) et le second composant de carrosserie (22, 24).

5. Carrosserie de véhicule conforme à l'une des revendications 1 à 3,
dans laquelle le châssis latéral (12) de l'habitacle du véhicule est réalisé avec le premier composant de carrosserie (22, 24, 36) et la partie inférieure de support annulaire de l'habitacle du véhicule est réalisée avec le second composant de carrosserie.

6. Carrosserie de véhicule conforme à l'une des revendications 1 à 5,
dans laquelle il est prévu un troisième composant de carrosserie (22, 24, 36, 42) dont la couche de colle (28) permettant le collage avec le premier composant de carrosserie ou le second composant de carrosserie (22, 24, 36, 42) est réalisée de manière à recouvrir la couche de colle (28) entre le premier composant de carrosserie et le second composant de carrosserie (22, 24, 36, 42).

7. Carrosserie de véhicule conforme à la revendication 6,
**caractérisée en ce que**
le châssis latéral (12) de l'habitacle du véhicule est réalisé avec le premier composant et le second composant de carrosserie (22, 24) et le tablier d'auvent de l'habitacle du véhicule est réalisé avec le troisième composant de carrosserie (42).

8. Carrosserie de véhicule conforme à l'une des revendications 1 à 7, comprenant un premier composant de carrosserie (22, 24, 36, 42) réalisé en un matériau synthétique renforcé par des fibres et un second composant de carrosserie (22, 24, 36, 42) réalisé en un matériau synthétique renforcé par des fibres et ces composants de carrosserie sont collés l'un avec l'autre au moyen d'une couche de colle (28) et sont chargés en poussée et/ou en traction dans le plan de charge principal (30, 32),
la couche de colle (28) étant réalisée au moyen d'un flan de colle courbe (38).

9. Véhicule conforme à la revendication 8, dans lequel un renfort de traverse de seuil (36) de l'habitacle du véhicule est réalisé avec le premier composant de carrosserie et le châssis latéral (12) de l'habitacle du véhicule est réalisé avec le second composant de carrosserie (22, 24).

10. Carrosserie de véhicule conforme à l'une des revendications 1 à 9, comprenant un premier composant de carrosserie (22, 24, 36, 42) réalisé en un matériau synthétique renforcé par des fibres et un second composant de carrosserie (22, 24, 36, 42) réalisé en un matériau synthétique renforcé par des fibres qui sont liés l'un à l'autre au moyen d'une couche de colle (28),
la couche de colle (28) ayant une épaisseur de 1,4 mm à 1,6 mm.
